# EUROPEAN PATENT SPECIFICATION

(11) **EP 4 350 727 B1**
(45) Date of publication and mention of the grant of the patent: **22.10.2025**
(21) Application number: 23201461.3
(22) Date of filing: 03.10.2023
(51) Int. Cl.: H01G 11/12, H01G 11/18, H01G 11/28, H01G 11/80, H01G 11/82, H01M 10/04, H01M 50/474, H01M 10/52, H01G 11/14, H01M 6/48, H01M 10/0585

(54) **POWER STORAGE MODULE**
STROMSPEICHERMODUL
MODULE DE STOCKAGE D'ÉNERGIE

(30) Priority: 06.10.2022 JP 2022161896
(43) Date of publication of application: 10.04.2024
(73) Proprietor: TOYOTA JIDOSHA KABUSHIKI KAISHA, Toyota-shi, Aichi-ken, 471-8571 (JP)
(72) Inventor: KOMURA, Shingo, Aichi-ken, 471-8571 (JP); YAMASHITA, Yusuke, Aichi-ken, 448-8671 (JP)
(74) Representative: D Young & Co LLP

(56) References cited:
- EP-A1- 1 841 001
- DE-A1- 102020 004 807
- DE-T5- 112018 007 182
- JP-A- 2018 018 698

## Description

### CROSS REFERENCE TO RELATED APPLICATIONS

This nonprovisional application is based on Japanese Patent Application No. 2022-161896 filed on October 6, 2022, with the Japan Patent Office.

### BACKGROUND

### Field

The present disclosure relates to a power storage module.

### Description of the Background Art

Japanese Patent Laying-Open No. 2021-128898 discloses a power storage module comprising: a plurality of bipolar electrodes; a plurality of separators interposed between the bipolar electrodes adjacent to each other; a sealing part sealing space between the bipolar electrodes adjacent to each other; and an electrolyte solution located in the space. Each separator has an overlapping portion that overlaps an electrode layer of the bipolar electrode when viewed in a stacking direction, and also has an exposed portion that does not overlap the electrode layer. The region at which the exposed portion is present functions to hold gas that is produced during charging and discharging.

### SUMMARY

As for the power storage module disclosed by Japanese Patent Laying-Open No. 2021-128898, the pressure inside the power storage module can sometimes be reduced to below atmospheric pressure, and, in this case, due to the pressure difference between inside and outside the power storage module, the electrode that is located outermost in the stacking direction can deform inwardly. If there is a foreign object, such as a piece of metal, present on this deformable region of the outermost electrode, namely a region where the exposed portion of the separator is present, the foreign object can penetrate through the separator, possibly causing a contact between a pair of electrodes that flank the exposed portion. Documents DE112018007182T5, DE102020004807A1, JP2018018698A and EP1841001A1 disclose comparable power storage modules, all featuring the same potential problem.

In order to avoid such a short circuit, the thickness of each separator can be increased. However, this would result in a decrease of the volume of the region, which is located within the region where the exposed portion is present, that is capable of holding gas produced during charging and discharging, and, thereby, when the pressure at this region increases, the sealing part can break. In order to avoid a pressure increase at this region, the area of the electrode layer can be decreased; however, this can cause a decrease of energy density.

An object of the present disclosure is to provide a power storage module that is capable of reducing a decrease of energy density and breakage of a sealing part, and also capable of inhibiting a short circuit from occurring when the inner pressure is reduced to below atmospheric pressure.

A power storage module according to an aspect of the present disclosure comprises: a plurality of bipolar electrodes stacked on top of one another; an outermost positive electrode located on one outer side of a set of the plurality of bipolar electrodes in a stacking direction of the plurality of bipolar electrodes; an outermost negative electrode located on the other outer side of the set of the plurality of bipolar electrodes in the stacking direction; a first sealing part that seals a first outer region in a state where pressure of the first outer region is below atmospheric pressure, the first outer region being formed between the outermost positive electrode and a bipolar electrode among the plurality of bipolar electrodes facing the outermost positive electrode; a second sealing part that seals a second outer region in a state where pressure of the second outer region is below atmospheric pressure, the second outer region being formed between the outermost negative electrode and a bipolar electrode among the plurality of bipolar electrodes facing the outermost negative electrode; an inner sealing part that seals an inner region in a state where pressure of the inner region is below atmospheric pressure, the inner region being formed between a pair of the bipolar electrodes that are adjacent to each other in the stacking direction; a first insulating member that insulates the outermost positive electrode from the bipolar electrode among the plurality of bipolar electrodes facing the outermost positive electrode; a second insulating member that insulates the outermost negative electrode from the bipolar electrode among the plurality of bipolar electrodes facing the outermost negative electrode; and an inner insulating member that insulates a pair of the bipolar electrodes that are adjacent to each other in the stacking direction, from one another, where each of the plurality of bipolar electrodes has: a current collector including a positive electrode current-collecting foil and a negative electrode current-collecting foil; a positive electrode active material layer provided on the positive electrode current-collecting foil of the current collector; and a negative electrode active material layer provided on the negative electrode current-collecting foil of the current collector, the outermost positive electrode has: a positive electrode current-collecting foil; and a positive electrode active material layer provided on the positive electrode current-collecting foil, the outermost negative electrode has: a negative electrode current-collecting foil; and a negative electrode active material layer provided on the negative electrode current-collecting foil, at each of a periphery of the positive electrode current-collecting foil of the current collector and a periphery of the positive electrode current-collecting foil of the outermost positive electrode, a positive-electrode-free portion that is not covered with the positive electrode active material layer is formed, at each of a periphery of the negative electrode current-collecting foil of the current collector and a periphery of the negative electrode current-collecting foil of the outermost negative electrode, a negative-electrode-free portion that faces the positive-electrode-free portion in the stacking direction and that is not covered with the negative electrode active material layer is formed, a region between the positive-electrode-free portion of the outermost positive electrode and the negative-electrode-free portion facing the positive-electrode-free portion constitutes the first outer region, a region between the negative-electrode-free portion of the outermost negative electrode and the positive-electrode-free portion facing the negative-electrode-free portion constitutes the second outer region, a region between a pair of the bipolar electrodes that are adjacent to each other, specifically between the positive-electrode-free portion and the negative-electrode-free portion facing each other in the stacking direction, constitutes the inner region, the first insulating member includes a first outer insulating part located in the first outer region, the second insulating member includes a second outer insulating part located in the second outer region, the inner insulating member includes an inner insulating part located in the inner region, and each of a thickness of the first outer insulating part and a thickness of the second outer insulating part is more than a thickness of the inner insulating part.

The foregoing and other objects, features, aspects and advantages of the present disclosure will become more apparent from the following detailed description of the present disclosure when taken in conjunction with the accompanying drawings.

### BRIEF DESCRIPTION OF THE DRAWINGS

Fig. 1 is a cross-sectional view schematically illustrating a power storage module according to First Embodiment of the present disclosure.
Fig. 2 is a cross-sectional view schematically illustrating a state where the regions are under reduced pressure.
Fig. 3 is a cross-sectional view schematically illustrating a power storage module according to Second Embodiment of the present disclosure.
Fig. 4 is a table showing Examples, Comparative Examples, and evaluation results.

### DESCRIPTION OF THE PREFERRED EMBODIMENTS

A description will be given of embodiments of the present disclosure, with reference to drawings. In the drawings referenced below, the same or equivalent members are denoted by the same numeral.

### (First Embodiment)

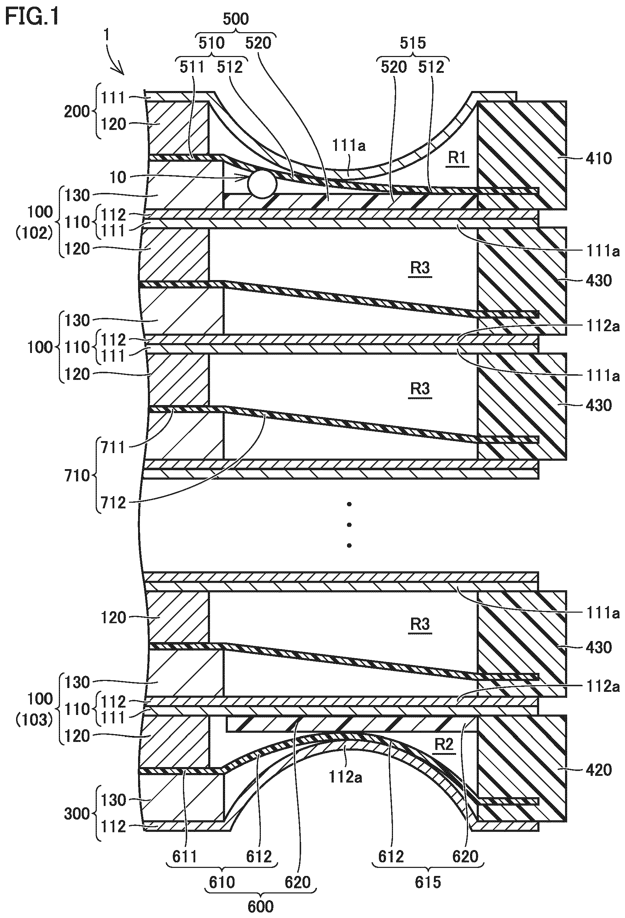

Fig. 1 is a cross-sectional view schematically illustrating a power storage module according to First Embodiment of the present disclosure. As illustrated in Fig. 1, a power storage module 1 comprises a plurality of bipolar electrodes 100, an outermost positive electrode 200, an outermost negative electrode 300, a first sealing part 410, a second sealing part 420, an inner sealing part 430, a first insulating member 500, a second insulating member 600, and an inner insulating member 710.

Bipolar electrodes 100 are stacked on top of one another. Each bipolar electrode 100 has a current collector 110, a positive electrode active material layer 120, and a negative electrode active material layer 130.

Current collector 110 is made of metal and, for example, has a rectangular shape. Current collector 110 has a positive electrode current-collecting foil 111 and a negative electrode current-collecting foil 112. Positive electrode current-collecting foil 111 is made of aluminum, for example. Negative electrode current-collecting foil 112 is made of copper foil, for example. Negative electrode current-collecting foil 112 is adhered to positive electrode current-collecting foil 111 by means of an electrically-conductive adhesive.

Positive electrode active material layer 120 is provided at one side of current collector 110, namely, on a surface of positive electrode current-collecting foil 111. Negative electrode active material layer 130 is provided at the other side of current collector 110, namely, on a surface of negative electrode current-collecting foil 112.

Bipolar electrodes 100 are stacked so that positive electrode active material layer 120 of one bipolar electrode 100 faces negative electrode active material layer 130 of another bipolar electrode 100 that is adjacent to the one bipolar electrode 100.

At a periphery of positive electrode current-collecting foil 111, a positive-electrode-free portion 111a that is not covered with positive electrode active material layer 120 is formed. At a periphery of negative electrode active material layer 130, a negative-electrode-free portion 112a that is not covered with negative electrode active material layer 130 is formed. Negative-electrode-free portion 112a faces positive-electrode-free portion 111a in the stacking direction of bipolar electrodes 100 (the vertical direction in Fig. 1).

Outermost positive electrode 200 is located on one outer side of a set of bipolar electrodes 100 in the stacking direction. Outermost positive electrode 200 has a positive electrode current-collecting foil 111, and a positive electrode active material layer 120 provided on positive electrode current-collecting foil 111. The configuration of positive electrode current-collecting foil 111 and positive electrode active material layer 120 in outermost positive electrode 200 is the same as that in bipolar electrode 100.

Outermost negative electrode 300 is located on the other outer side of the set of bipolar electrodes 100 in the stacking direction. Outermost negative electrode 300 has a negative electrode current-collecting foil 112, and a negative electrode active material layer 130 provided on negative electrode current-collecting foil 112. The configuration of negative electrode current-collecting foil 112 and negative electrode active material layer 130 in outermost negative electrode 300 is the same as that in bipolar electrode 100.

First sealing part 410 seals a first outer region R1 in a state where pressure of first outer region R1 is below atmospheric pressure, where first outer region R1 is formed between outermost positive electrode 200 and a bipolar electrode 100 among bipolar electrodes 100 facing outermost positive electrode 200 (hereinafter expressed as "a bipolar electrode 102") (see Fig. 1). First outer region R1 is a region that is formed between positive-electrode-free portion 111a of outermost positive electrode 200 and negative-electrode-free portion 112a facing this positive-electrode-free portion 111a. First outer region R1 is filled with an electrolyte solution. Because the pressure of first outer region R1 is below atmospheric pressure, positive-electrode-free portion 111a of outermost positive electrode 200 is deformed inwardly in the stacking direction as seen in Fig. 1.

First sealing part 410 is made of an insulating material (such as resin). First sealing part 410 has a function of preventing leakage of the electrolyte solution from first outer region R1 and penetration of moisture from outside into first outer region R1, and also a function of maintaining the space between positive-electrode-free portion 111a and negative-electrode-free portion 112a flanking first outer region R1.

Second sealing part 420 seals a second outer region R2 in a state where pressure of second outer region R2 is below atmospheric pressure, where second outer region R2 is formed between outermost negative electrode 300 and a bipolar electrode 100 among bipolar electrodes 100 facing outermost negative electrode 300 (hereinafter expressed as "a bipolar electrode 103") (see Fig. 1). Second outer region R2 is a region that is formed between negative-electrode-free portion 112a of outermost negative electrode 300 and positive-electrode-free portion 111a facing this negative-electrode-free portion 112a. Second outer region R2 is filled with an electrolyte solution. The pressure of second outer region R2 is the same as the pressure of first outer region R1. Because the pressure of second outer region R2 is below atmospheric pressure, negative-electrode-free portion 112a of outermost negative electrode 300 is deformed inwardly in the stacking direction as seen in Fig. 1. The configuration of second sealing part 420 is the same as that of first sealing part 410.

Inner sealing part 430 seals an inner region R3 in a state where pressure of inner region R3 is below atmospheric pressure, where inner region R3 is formed between a pair of bipolar electrodes 100 that are adjacent to each other in the stacking direction (see Fig. 1). Inner region R3 is a region between a pair of bipolar electrodes 100 that are adjacent to each other, specifically between positive-electrode-free portion 111a and negative-electrode-free portion 112a facing each other in the stacking direction. Inner region R3 is filled with an electrolyte solution. The configuration of inner sealing part 430 is the same as that of first sealing part 410. The pressure of inner region R3 is the same as the pressure of first outer region R1.

First insulating member 500 insulates outermost positive electrode 200 from bipolar electrode 102. First insulating member 500 has a first separator 510 and a first insulating film 520.

First separator 510 is interposed between outermost positive electrode 200 and bipolar electrode 102. First separator 510 is made of an insulating material and allows ions to pass through itself. Examples of first separator 510 include a microporous polyolefin film (having a polyethylene monolayer structure and/or a polypropylene/polyethylene/polypropylene three-layer structure, for example). On at least one side of the microporous polyolefin film, a ceramic layer may be provided. First separator 510 has a first interposed part 511 and a first peripheral part 512.

First interposed part 511 is interposed between positive electrode active material layer 120 of outermost positive electrode 200 and negative electrode active material layer 130 of bipolar electrode 102.

First peripheral part 512 is connected with an outer edge of first interposed part 511. First peripheral part 512 is located in first outer region R1. An outer end of first peripheral part 512 is supported by first sealing part 410. As illustrated in Fig. 1, first peripheral part 512 is pushed by positive-electrode-free portion 111a, which is deformed inwardly in the stacking direction, and thereby deformed inwardly in the stacking direction.

First insulating film 520 is a separate member from first separator 510. First insulating film 520 is located in first outer region R1. The thickness of first insulating film 520 is designed to be equal to or larger than the thickness of first separator 510, for example. First insulating film 520 is preferably located in first outer region R1 and on the inside of first peripheral part 512 in the stacking direction. In Fig. 1, a foreign object 10 such as a piece of metal is seen between first peripheral part 512 and first insulating film 520.

First peripheral part 512 and first insulating film 520 constitute a first outer insulating part 515, which is located in first outer region R1. First outer insulating part 515 insulates positive-electrode-free portion 111a from negative-electrode-free portion 112a, the latter two flanking first outer region R1.

Second insulating member 600 insulates outermost negative electrode 300 from bipolar electrode 103. Second insulating member 600 has a second separator 610 and a second insulating film 620.

Second separator 610 is interposed between outermost negative electrode 300 and bipolar electrode 103. The configuration of second separator 610 is the same as the configuration of first separator 510. That is, the thickness of second separator 610 is the same as the thickness of first separator 510. Second separator 610 has a second interposed part 611 and a second peripheral part 612.

Second interposed part 611 is interposed between negative electrode active material layer 130 of outermost negative electrode 300 and positive electrode active material layer 120 of bipolar electrode 103.

Second peripheral part 612 is connected with an outer edge of second interposed part 611. Second peripheral part 612 is located in second outer region R2. An outer end of second peripheral part 612 is supported by second sealing part 420. As seen in Fig. 1, second peripheral part 612 is pushed by negative-electrode-free portion 112a, which is deformed inwardly in the stacking direction, and thereby deformed inwardly in the stacking direction.

Second insulating film 620 is a separate member from second separator 610. Second insulating film 620 is located in second outer region R2. The configuration of second insulating film 620 is the same as the configuration of first insulating film 520. Second insulating film 620 is preferably located in second outer region R2 and on the inside of second peripheral part 612 in the stacking direction.

Second peripheral part 612 and second insulating film 620 constitute a second outer insulating part 615, which is located in second outer region R2. Second outer insulating part 615 insulates positive-electrode-free portion 111a from negative-electrode-free portion 112a, the latter two flanking second outer region R2.

Inner insulating member 710 insulates a pair of bipolar electrodes 100 that are adjacent to each other in the stacking direction, from each other. Inner insulating member 710 is constituted of an inner separator (hereinafter expressed as "an inner separator 710") that is interposed between a pair of bipolar electrodes 100 that are adjacent to each other in the stacking direction. Inner separator 710 has the same thickness as first separator 510. Inner separator 710 has an inner interposed part 711 and an inner peripheral part 712.

Inner interposed part 711 is interposed between positive electrode active material layer 120 of one bipolar electrode 100 and negative electrode active material layer 130 of another bipolar electrode 100 that is adjacent to the one bipolar electrode 100.

Inner peripheral part 712 is connected with inner interposed part 711. Inner peripheral part 712 is located in inner region R3. Inner peripheral part 712 constitutes an inner insulating part (which may also be expressed as "an inner insulating part 712" hereinafter).

As illustrated in Fig. 1, each of the thickness of first outer insulating part 515 and the thickness of second outer insulating part 615 is more than the thickness of inner insulating part 712. Herein, the "thickness of first outer insulating part 515" means the total thickness of first outer insulating part 515, more specifically, the sum of the thickness of first peripheral part 512 and the thickness of first insulating film 520. The same applies to the "thickness of second outer insulating part 615".

Next, a method of producing power storage module 1 will be described.

Firstly, bipolar electrodes 100, outermost positive electrode 200, and outermost negative electrode 300 are prepared, which are then stacked on top of one another with separators 510, 610, 710 interposed therebetween, and first insulating film 520 is positioned in first outer region R1 and second insulating film 620 is positioned in second outer region R2.

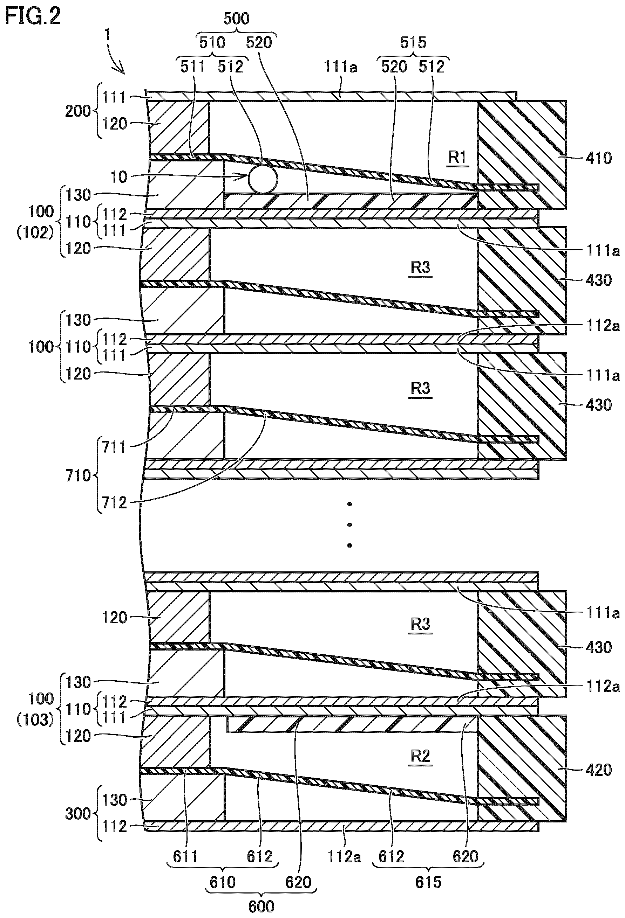

Then, sealing parts 410 to 430 are heat-sealed to positive-electrode-free portion 111a and to negative-electrode-free portion 112a, and, through a liquid inlet, an electrolyte solution is injected into each of regions R1 to R3. Fig. 2 illustrates a state where the electrolyte solution has already been injected in each of regions R1 to R3, for example.

Then, power storage module 1 is charged to a certain voltage, and an SEI film is formed on the negative electrode due to degradation of the solvent of the electrolyte solution and additives, accompanied by a by-product gas discharged out of power storage module 1.

Subsequently, in an atmosphere under reduced pressure (an atmosphere where the pressure is below atmospheric pressure), the liquid inlet is sealed (a reduced-pressure sealing step). Thus, power storage module 1 is completed. When this power storage module 1 is moved from the reduced-pressure atmosphere to an atmosphere under atmospheric pressure, positive-electrode-free portion 111a of outermost positive electrode 200 and negative-electrode-free portion 112a of outermost negative electrode 300 are deformed inwardly in the stacking direction, as seen in Fig. 1.

As described above, in power storage module 1 according to the present embodiment, positive-electrode-free portion 111a of outermost positive electrode 200 and negative-electrode-free portion 112a of outermost negative electrode 300 deform inwardly in the stacking direction due to the low pressure of first outer region R1, second outer region R2, and inner region R3 below atmospheric pressure, but because each of the thickness of first outer insulating part 515 and the thickness of second outer insulating part 615 is more than the thickness of inner insulating part 712, foreign object 10 such as a piece of metal, if it is present, in first outer region R1, for example, is inhibited from penetrating through first outer insulating part 515.

In addition, because the thickness of inner insulating part 712 is less than each of the thickness of first outer insulating part 515 and the thickness of second outer insulating part 615, inner region R3 has enough space for holding gas that is produced during charging and discharging and, thereby, the pressure of inner region R3 is less likely to become high. This reduces breakage of inner sealing part 430, and it also decreases the necessity for enlarging electrode-free portions 111a, 112a in bipolar electrode 100 in an attempt to prevent the pressure of inner region R3 from rising too high, resulting in mitigating a decrease of energy density.

In the above-mentioned embodiment, first insulating film 520 may be made of the same material as a material of first sealing part 410 and integrally formed with first sealing part 410, and second insulating film 620 may be made of the same material as a material of second sealing part 420 and integrally formed with second sealing part 420. In this aspect, displacement of first insulating film 520 within first outer region R1 and displacement of second insulating film 620 within second outer region R2 are reduced.

Moreover, first insulating film 520 may be located on the outside of first peripheral part 512 in the stacking direction, and second insulating film 620 may be located on the outside of second peripheral part 612 in the stacking direction.

### (Second Embodiment)

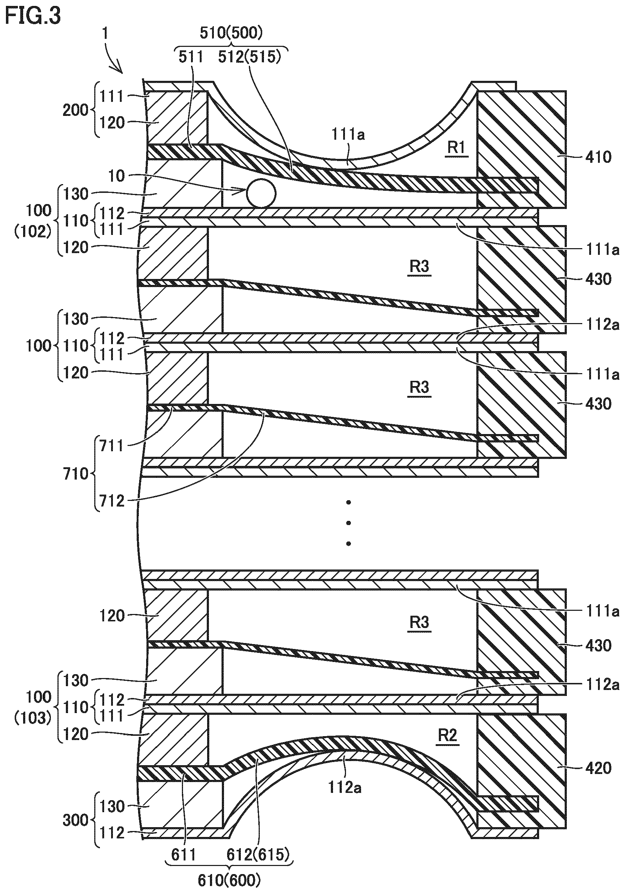

Next, with reference to Fig. 3, a power storage module 1 according to Second Embodiment of the present disclosure will be described. The below description of Second Embodiment only explains about the parts that are different from First Embodiment, and explanation of the same structure, action, and effect as in First Embodiment will not be repeated.

In the present embodiment, each of the thickness of first separator 510 and the thickness of second separator 610 is more than the thickness of inner separator 710. Moreover, first outer insulating part 515 is constituted solely of first peripheral part 512 which is thicker than inner peripheral part 712, and second outer insulating part 615 is constituted solely of second peripheral part 612 which is thicker than inner peripheral part 712.

### [Examples]

Next, examples of power storage module 1 will be described, along with Comparative Examples. Example 1-1 to Example 1-8 are examples of Second Embodiment, and Example 2-1 to Example 5-3 are examples of First Embodiment. In each of Examples and Comparative Examples, a power storage module having the below configuration was used.

Positive electrode current-collecting foil: Aluminum foil having a positive electrode provided on one side.

Positive electrode: Slurry of PVdF binder and electrically-conductive material in NMP or water solvent.

Negative electrode current-collecting foil: Copper foil having a negative electrode provided on one side.

Negative electrode: Slurry of SBR, CMC, and if needed electrically-conductive material, in water solvent.

Positive electrode active material layer: Li(NiₓMn_{y}Co_{z})O₂ and/or LiFePO₄, etc..

Negative electrode active material layer: Natural graphite and/or artificial graphite, etc..

Separator: Microporous polyolefin film (a film having a polyethylene monolayer and a ceramic layer).

First insulating film: LDPE (low-density polyethylene), HDPE (high-density polyethylene), PP (polypropylene), polyimide.

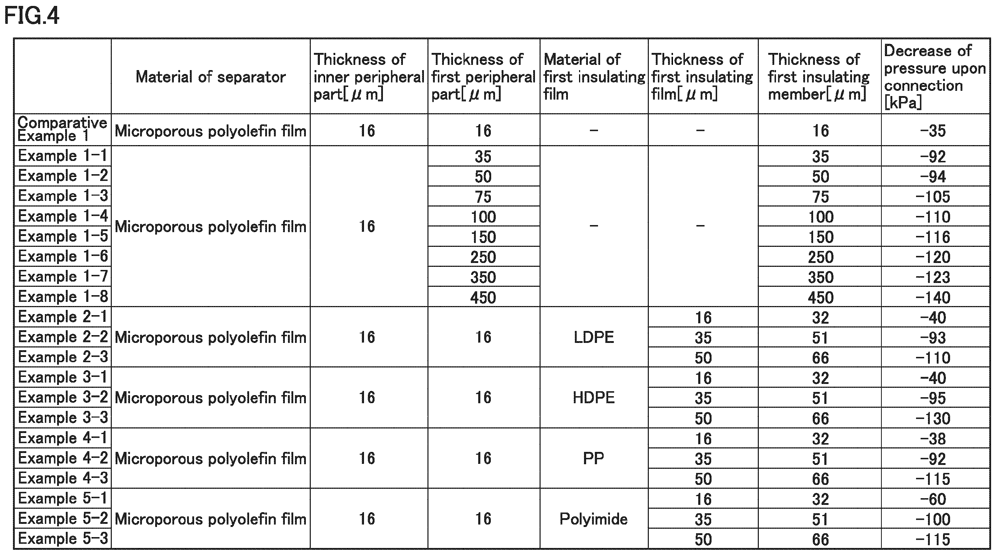

In each of Examples and Comparative Examples, five foreign objects 10 were placed inside power storage module 1, within first outer region R1 on the inside of first peripheral part 512 in the stacking direction, and, in that state, the pressure of first outer region R1 was reduced in the same environment as in the reduced-pressure sealing step performed during production of power storage module 1; while the resistance between outermost positive electrode 200 and bipolar electrode 102 was being measured, the decrease of pressure from atmospheric pressure (pressure difference from atmospheric pressure) was evaluated at the time when first outer insulating part 515 broke and thereby positive electrode current-collecting foil 111 of outermost positive electrode 200 was electrically connected with negative electrode current-collecting foil 112 of bipolar electrode 102. Fig. 4 is a table showing evaluation results of Examples and Comparative Examples. The foreign object was an L-shaped piece of metal (0.6 mm in the longitudinal direction, 0.4 mm in the widthwise direction). The covering rate at which negative-electrode-free portion 112a of bipolar electrode 102 was covered with first insulating film 520 was 95%.

Examples 1-1 to 1-8 in Fig. 4 show that, in the Examples where first outer insulating part 515 was constituted solely of first peripheral part 512, the decrease of pressure increased as the thickness of first peripheral part 512 increased.

In Examples 2-1 to 5-3, a separator having the same configuration as Comparative Example as well as first insulating film 520 having different thicknesses were used. These Examples show that, also in the Examples where first outer insulating part 515 was constituted of first peripheral part 512 and first insulating film 520, the decrease of pressure increased as the thickness of first outer insulating part 515 (the thickness of first insulating film 520) increased.

Although the embodiments of the present disclosure have been described, the embodiments disclosed herein are illustrative and non-restrictive in any respect. The scope of the present invention is defined by the claims.

## Claims

1. A power storage module (1) comprising:
a plurality of bipolar electrodes (100) stacked on top of one another;
an outermost positive electrode (200) located on one outer side of a set of the plurality of bipolar electrodes in a stacking direction of the plurality of bipolar electrodes;
an outermost negative electrode (300) located on the other outer side of the set of the plurality of bipolar electrodes in the stacking direction;
a first sealing part (410) that seals a first outer region (R1) in a state where pressure of the first outer region is below atmospheric pressure, the first outer region being formed between the outermost positive electrode and a bipolar electrode among the plurality of bipolar electrodes facing the outermost positive electrode;
a second sealing part (420) that seals a second outer region (R2) in a state where pressure of the second outer region is below atmospheric pressure, the second outer region being formed between the outermost negative electrode and a bipolar electrode among the plurality of bipolar electrodes facing the outermost negative electrode;
an inner sealing part (430) that seals an inner region (R3) in a state where pressure of the inner region is below atmospheric pressure, the inner region being formed between a pair of the bipolar electrodes that are adjacent to each other in the stacking direction;
a first insulating member (500) that insulates the outermost positive electrode from the bipolar electrode among the plurality of bipolar electrodes facing the outermost positive electrode;
a second insulating member (600) that insulates the outermost negative electrode from the bipolar electrode among the plurality of bipolar electrodes facing the outermost negative electrode; and
an inner insulating member (710) that insulates a pair of the bipolar electrodes that are adjacent to each other in the stacking direction, from one another, where
each of the plurality of bipolar electrodes (100) has:
a current collector (110) including a positive electrode current-collecting foil (111) and a negative electrode current-collecting foil (112);
a positive electrode active material layer (120) provided on the positive electrode current-collecting foil of the current collector; and
a negative electrode active material layer (130) provided on the negative electrode current-collecting foil of the current collector,
the outermost positive electrode (200) has:
a positive electrode current-collecting foil (111); and
a positive electrode active material layer (120) provided on the positive electrode current-collecting foil,
the outermost negative electrode (300) has:
a negative electrode current-collecting foil (112); and
a negative electrode active material layer (130) provided on the negative electrode current-collecting foil,
at each of a periphery of the positive electrode current-collecting foil of the current collector and a periphery of the positive electrode current-collecting foil of the outermost positive electrode, a positive-electrode-free portion (111a) that is not covered with the positive electrode active material layer is formed,
at each of a periphery of the negative electrode current-collecting foil of the current collector and a periphery of the negative electrode current-collecting foil of the outermost negative electrode, a negative-electrode-free portion (112a) that faces the positive-electrode-free portion in the stacking direction and that is not covered with the negative electrode active material layer is formed,
a region between the positive-electrode-free portion of the outermost positive electrode and the negative-electrode-free portion facing the positive-electrode-free portion constitutes the first outer region,
a region between the negative-electrode-free portion of the outermost negative electrode and the positive-electrode-free portion facing the negative-electrode-free portion constitutes the second outer region,
a region between a pair of the bipolar electrodes that are adjacent to each other, specifically between the positive-electrode-free portion and the negative-electrode-free portion facing each other in the stacking direction, constitutes the inner region,
the first insulating member includes a first outer insulating part (515) located in the first outer region,
the second insulating member includes a second outer insulating part (615) located in the second outer region,
the inner insulating member includes an inner insulating part (712) located in the inner region, and
each of a thickness of the first outer insulating part and a thickness of the second outer insulating part is more than a thickness of the inner insulating part.

2. The power storage module according to claim 1, wherein
the first insulating member includes a first separator (510) that is interposed between the outermost positive electrode and the bipolar electrode among the plurality of bipolar electrodes facing the outermost positive electrode,
the first separator has:
a first interposed part (511) that is interposed between the positive electrode active material layer of the outermost positive electrode and the negative electrode active material layer of the bipolar electrode; and
a first peripheral part (512) that is connected with the first interposed part and located in the first outer region,
the first outer insulating part has:
the first peripheral part; and
a first insulating film (520) that is a separate member from the first separator and that is located in the first outer region,
the second insulating member includes a second separator (610) that is interposed between the outermost negative electrode and the bipolar electrode among the plurality of bipolar electrodes facing the outermost negative electrode, the second separator having the same thickness as the first separator,
the second separator has:
a second interposed part (611) that is interposed between the negative electrode active material layer of the outermost negative electrode and the positive electrode active material layer of the bipolar electrode; and
a second peripheral part (612) that is connected with the second interposed part and located in the second outer region,
the second outer insulating part has:
the second peripheral part; and
a second insulating film (620) that is a separate member from the second separator and that is located in the second outer region,
the inner insulating member includes an inner separator (710) that is interposed between a pair of the bipolar electrodes that are adjacent to each other in the stacking direction, the inner separator having the same thickness as the first separator,
the inner separator has:
an inner interposed part (711) that is interposed between the positive electrode active material layer of one bipolar electrode of the pair and the negative electrode active material layer of the other bipolar electrode of the pair; and
an inner peripheral part (712) that is connected with the inner interposed part and located in the inner region, and
the inner insulating part is constituted of the inner peripheral part.

3. The power storage module according to claim 2, wherein
the first insulating film (520) is located in the first outer region and on an inside of the first peripheral part in the stacking direction, and
the second insulating film (620) is located in the second outer region and on an inside of the second peripheral part in the stacking direction.

4. The power storage module according to claim 3, wherein
the first insulating film (520) is made of the same material as a material of the first sealing part and integrally formed with the first sealing part, and
the second insulating film (620) is made of the same material as a material of the second sealing part and integrally formed with the second sealing part.

5. The power storage module according to claim 1, wherein
the first insulating member includes a first separator (510) that is interposed between the outermost positive electrode and the bipolar electrode among the plurality of bipolar electrodes facing the outermost positive electrode,
the first separator has:
a first interposed part (511) that is interposed between the positive electrode active material layer of the outermost positive electrode and the negative electrode active material layer of the bipolar electrode; and
a first peripheral part (512) that is connected with the first interposed part and located in the first outer region,
the first outer insulating part is constituted of the first peripheral part,
the second insulating member includes a second separator (610) that is interposed between the outermost negative electrode and the bipolar electrode among the plurality of bipolar electrodes facing the outermost negative electrode, the second separator having the same thickness as the first separator,
the second separator has:
a second interposed part (611) that is interposed between the negative electrode active material layer of the outermost negative electrode and the positive electrode active material layer of the bipolar electrode; and
a second peripheral part (612) that is connected with the second interposed part and located in the second outer region,
the second outer insulating part is constituted of the second peripheral part,
the inner insulating member includes an inner separator (710) that is located between a pair of the bipolar electrodes that are adjacent to each other in the stacking direction, the inner separator having a thickness less than a thickness of the first separator,
the inner separator has:
an inner interposed part (711) that is interposed between the positive electrode active material layer of one bipolar electrode of the pair and the negative electrode active material layer of the other bipolar electrode of the pair; and
an inner peripheral part (712) that is connected with the inner interposed part and located in the inner region, and
the inner insulating part is constituted of the inner peripheral part.

## Patentansprüche

1. Energiespeichermodul (1), umfassend:
eine Vielzahl von bipolaren Elektroden (100), die aufeinandergestapelt sind;
eine äußerste positive Elektrode (200), die an einer Außenseite eines Satzes der Vielzahl von bipolaren Elektroden in einer Stapelrichtung der Vielzahl von bipolaren Elektroden angebracht ist;
eine äußerste negative Elektrode (300), die an der anderen Außenseite des Satzes der Vielzahl von bipolaren Elektroden in der Stapelrichtung angebracht ist;
ein erstes Versiegelungsbauteil (410), das ein erstes äußeres Gebiet (R1) in einem Zustand versiegelt, in dem ein Druck des ersten äußeren Gebiets unterhalb des Atmosphärendrucks liegt, wobei das erste äußere Gebiet zwischen der äußersten positiven Elektrode und einer bipolaren Elektrode aus der Vielzahl von bipolaren Elektroden gebildet ist, die der äußersten positiven Elektrode zugewandt ist;
ein zweites Versiegelungsbauteil (420), das ein zweites äußeres Gebiet (R2) in einem Zustand versiegelt, in dem ein Druck des zweiten äußeren Gebiets unterhalb des Atmosphärendrucks liegt, wobei das zweite äußere Gebiet zwischen der äußersten negativen Elektrode und einer bipolaren Elektrode aus der Vielzahl von bipolaren Elektroden gebildet ist, die der äußersten negativen Elektrode zugewandt ist;
ein inneres Versiegelungsbauteil (430), das ein inneres Gebiet (R3) in einem Zustand versiegelt, indem der Druck des inneren Gebiets unterhalb des Atmosphärendrucks liegt, wobei das innere Gebiet zwischen einem Paar der bipolaren Elektroden gebildet ist, die in der Stapelrichtung benachbart zueinander sind;
ein erstes Isolationselement (500), das die äußerste positive Elektrode von der bipolaren Elektrode aus der Vielzahl von bipolaren Elektroden isoliert, die der äußersten positiven Elektrode zugewandt ist;
ein zweites Isolationselement (600), das die äußerste negative Elektrode von der bipolaren Elektrode aus der Vielzahl von bipolaren Elektroden isoliert, die der äußersten negativen Elektrode zugewandt ist;
ein inneres Isolationselement (710), das ein Paar der bipolaren Elektroden voneinander isoliert, die in der Stapelrichtung benachbart zueinander sind, wobei jede aus der Vielzahl von bipolaren Elektroden (100) aufweist:
einen Stromabnehmer (110), der eine stromabnehmende positive Elektrodenfolie (111) und eine stromabnehmende negative Elektrodenfolie (112) beinhaltet;
eine aktive positive Elektrodenmaterialschicht (120), die auf der stromabnehmenden positiven Elektrodenfolie des Stromabnehmers bereitgestellt wird; und
eine aktive negative Elektrodenmaterialschicht (130), die auf der stromabnehmenden negativen Elektrodenfolie des Stromabnehmers bereitgestellt wird,
wobei die äußerste positive Elektrode (200) aufweist:
eine stromabnehmende positive Elektrodenfolie (111); und
eine aktive positive Elektrodenmaterialschicht (120), die auf der stromabnehmenden positiven Elektrodenfolie bereitgestellt wird,
wobei die äußerste negative Elektrode (300) aufweist:
eine stromabnehmende negative Elektrodenfolie (112); und
eine aktive negative Elektrodenmaterialschicht (130), die auf der stromabnehmenden negativen Elektrodenfolie bereitgestellt wird,
wobei an jeder Peripherie der stromabnehmenden positiven Elektrodenfolie des Stromabnehmers und einer Peripherie der stromabnehmenden positiven Elektrodenfolie der äußersten positiven Elektrode ein Abschnitt ohne positive Elektrode (111a) gebildet wird, der nicht von der aktiven positiven Elektrodenmaterialschicht abgedeckt wird,
wobei an jeder Peripherie der stromabnehmenden negativen Elektrodenfolie des Stromabnehmers und einer Peripherie der stromabnehmenden negativen Elektrodenfolie der äußersten negativen Elektrode ein Abschnitt ohne negative Elektrode (112a) gebildet wird, der in der Stapelrichtung dem Abschnitt ohne positive Elektrode zugewandt ist und der nicht von der aktiven negativen Elektrodenmaterialschicht abgedeckt wird,
wobei ein Gebiet zwischen dem Abschnitt ohne positive Elektrode der äußersten positiven Elektrode und dem Abschnitt ohne negative Elektrode, der dem Abschnitt ohne positive Elektrode zugewandt ist, das erste äußere Gebiet bildet,
wobei ein Gebiet zwischen dem Abschnitt ohne negative Elektrode der äußersten negativen Elektrode und dem Abschnitt ohne positive Elektrode der dem Abschnitt ohne negative Elektrode zugewandt ist, das zweite äußere Gebiet bildet,
wobei ein Gebiet zwischen einem Paar der bipolaren Elektroden, die benachbart zueinander sind, insbesondere zwischen dem Abschnitt ohne positive Elektrode und dem Abschnitt ohne negative Elektrode, die in der Stapelrichtung einander zugewandt sind, das innere Gebiet bildet,
wobei das erste Isolationselement ein erstes äußeres Isolationsbauteil (515) beinhaltet, das in dem ersten äußeren Gebiet angebracht ist,
wobei das zweite Isolationselement ein zweites äußeres Isolationsbauteil (615) beinhaltet, das in dem zweiten äußeren Gebiet angebracht ist,
wobei das innere Isolationselement ein inneres Isolationsbauteil (712) beinhaltet, das in dem inneren Gebiet angebracht ist, und
wobei jede einer Dicke des ersten äußeren Isolationsbauteils und einer Dicke des zweiten äußeren Isolationsbauteils größer als eine Dicke des inneren Isolationsbauteils ist.

2. Energiespeichermodul nach Anspruch 1, wobei
das erste Isolationselement ein erstes Trennelement (510) beinhaltet, das zwischen der äußersten positiven Elektrode und der bipolaren Elektrode aus der Vielzahl von bipolaren Elektroden eingefügt ist, die der äußersten positiven Elektrode zugewandt ist,
wobei das erste Trennelement aufweist:
ein erstes eingefügtes Bauteil (511), das zwischen der aktiven positiven Elektrodenmaterialschicht der äußersten positiven Elektrode und der aktiven negativen Elektrodenmaterialschicht der bipolaren Elektrode eingefügt ist; und
ein erstes peripheres Bauteil (512), das mit dem ersten eingefügten Bauteil verbunden ist und das in dem ersten äußeren Gebiet angebracht ist,
wobei das erste äußere Isolationsbauteil aufweist:
das erste periphere Bauteil; und
einen ersten Isolationsfilm (520), der ein von dem ersten Trennelement getrenntes Element ist und der in dem ersten äußeren Gebiet angebracht ist,
das zweite Isolationselement ein zweites Trennelement (610) beinhaltet, das zwischen der äußersten negativen Elektrode und der bipolaren Elektrode aus der Vielzahl von bipolaren Elektroden eingefügt ist, die der äußersten negativen Elektrode zugewandt ist, wobei das zweite Trennelement die gleiche Dicke wie das erste Trennelement aufweist,
wobei das zweite Trennelement aufweist:
ein zweites eingefügtes Bauteil (611), das zwischen der aktiven negativen Elektrodenmaterialschicht der äußersten negativen Elektrode und der aktiven positiven Elektrodenmaterialschicht der bipolaren Elektrode eingefügt ist; und
ein zweites peripheres Bauteil (612), das mit dem zweiten eingefügten Bauteil verbunden ist und das in dem zweiten äußeren Gebiet angebracht ist,
wobei das zweite äußere Isolationsbauteil aufweist:
das zweite periphere Bauteil; und
einen zweiten Isolationsfilm (620), der ein von dem zweiten Trennelement getrenntes Element ist und der in dem zweiten äußeren Gebiet angebracht ist,
das innere Isolationselement ein inneres Trennelement (710 beinhaltet, das zwischen einem Paar von bipolaren Elektroden eingefügt ist, die in der Stapelrichtung benachbart zueinander sind, wobei das innere Trennelement die gleiche Dicke wie das erste Trennelement aufweist;
wobei das innere Trennelement aufweist:
ein inneres eingefügtes Bauteil (711), das zwischen der aktiven positiven Elektrodenmaterialschicht einer bipolaren Elektrode des Paars und der aktiven negativen Elektrodenmaterialschicht der anderen bipolaren Elektrode des Paars eingefügt ist; und
ein inneres peripheres Bauteil (712), das mit dem inneren eingefügten Bauteil verbunden ist und das in dem inneren Gebiet angebracht ist, und
wobei das innere Isolationsbauteil aus dem inneren peripheren Bauteil gebildet ist.

3. Energiespeichermodul nach Anspruch 2, wobei
der erste Isolationsfilm (520) in dem ersten äußeren Gebiet und in der Stapelrichtung auf einer Innenseite des ersten peripheren Bauteils angebracht ist, und
der zweite Isolationsfilm (620) in dem zweiten äußeren Gebiet und in der Stapelrichtung auf einer Innenseite des zweiten peripheren Bauteils angebracht ist.

4. Energiespeichermodul nach Anspruch 3, wobei
der erste Isolationsfilm (520) aus dem gleichen Material wie ein Material des ersten Versiegelungsbauteils gefertigt ist und einstückig mit dem ersten Versiegelungsbauteil gebildet ist, und
der zweite Isolationsfilm (620) aus dem gleichen Material wie ein Material des zweiten Versiegelungsbauteils gefertigt ist und einstückig mit dem zweiten Versiegelungsbauteil gebildet ist.

5. Energiespeichermodul nach Anspruch 1, wobei
das erste Isolationselement ein erstes Trennelement (510) beinhaltet, das zwischen der äußersten positiven Elektrode und der bipolaren Elektrode aus der Vielzahl von bipolaren Elektroden eingefügt ist, die der äußersten positiven Elektrode zugewandt ist,
wobei das erste Trennelement aufweist:
ein erstes eingefügtes Bauteil (511), das zwischen der aktiven positiven Elektrodenmaterialschicht der äußersten positiven Elektrode und der aktiven negativen Elektrodenmaterialschicht der bipolaren Elektrode eingefügt ist; und
ein erstes peripheres Bauteil (512), das mit dem ersten eingefügten Bauteil verbunden ist und das in dem ersten äußeren Gebiet angebracht ist,
wobei das erste äußere Isolationsbauteil aus dem ersten inneren peripheren Bauteil gebildet ist,
das zweite Isolationselement ein zweites Trennelement (610) beinhaltet, das zwischen der äußersten negativen Elektrode und der bipolaren Elektrode aus der Vielzahl von bipolaren Elektroden eingefügt ist, die der äußersten negativen Elektrode zugewandt ist, wobei das zweite Trennelement die gleiche Dicke wie das erste Trennelement aufweist,
wobei das zweite Trennelement aufweist:
ein zweites eingefügtes Bauteil (611), das zwischen der aktiven negativen Elektrodenmaterialschicht der äußersten negativen Elektrode und der aktiven positiven Elektrodenmaterialschicht der bipolaren Elektrode eingefügt ist; und
ein zweites peripheres Bauteil (612), das mit dem zweiten eingefügten Bauteil verbunden ist und das in dem zweiten äußeren Gebiet angebracht ist,
wobei das zweite äußere Isolationsbauteil aus dem zweiten inneren peripheren Bauteil gebildet ist,
wobei das innere Isolationselement ein inneres Trennelement (710) beinhaltet, das zwischen einem Paar von bipolaren Elektroden angebracht ist, die in der Stapelrichtung benachbart zueinander sind, wobei das innere Trennelement eine Dicke aufweist, die geringer als eine Dicke des ersten Trennelements ist;
wobei das innere Trennelement aufweist:
ein inneres eingefügtes Bauteil (711), das zwischen der aktiven positiven Elektrodenmaterialschicht einer bipolaren Elektrode des Paars und der aktiven negativen Elektrodenmaterialschicht der anderen bipolaren Elektrode des Paars eingefügt ist; und
ein inneres peripheres Bauteil (712), das mit dem inneren eingefügten Bauteil verbunden ist und das in dem inneren Gebiet angebracht ist, und
wobei das innere Isolationsbauteil aus dem inneren peripheren Bauteil gebildet ist.

## Revendications

1. Module de stockage d'énergie comprenant:
une plurarité d'électrodes bipolaires (100) empilées les unes au-dessus des autres ;
une électrode positive la plus à l'extérieur (200) située sur un côté extérieur d'un ensemble de la plurarité d'électrodes bipolaires dans une direction d'empilage de la plurarité d'électrodes bipolaires ;
une électrode négative la plus à l'extérieur (300) située sur l'autre côté extérieur de l'ensemble de la plurarité d'électrodes bipolaires dans ladirection d'empilage ;
un premier corps de scellement (410) qui scelle une première région extérieure (R1) dans un état où la pression de la première région extérieure est en dessous de la pression atmosphérique, la première région extérieure étant formée entre l'électrode positive la plus à l'extérieur et une électrode bipolaire parmi la plurarité d'électrodes bipolaires faisant face à l'électrode positive la plus à l'extérieur ;
un deuxième corps d'étanchéité (420) qui scelle une deuxième région extérieure (R2) dans un état où la pression de la deuxième région extérieure est en dessous de la pression atmosphérique, la deuxième région extérieure étant formée entre l'électrode négative la plus à l'extérieur et une électrode bipolaire parmi la plurarité d'antennes bipolaires faisant face à l'électrode négative la plus à l'extérieur ;
un corps de scellement intérieur (430) qui scelle une région intérieure (R3) dans un état où la pression de la région intérieure est en dessous de la pression atmosphérique, la région intérieure étant formée entre une paire des électrodes bipolaires qui sont adjacentes l'une à l'autre dans la direction d'empilage ;
un premier élément isolant (500) qui isole l'électrode positive la plus à l'extérieur de l'électrode bipolaire parmi la plurarité d'électrodes bipolaires faisant face à l'électrode positive la plus à l'extérieur ;
un deuxième élément isolant (600) qui isole l'électrode négative la plus à l'extérieur de l'électrode bipolaire parmi la plurarité d'antennes bipolaires faisant face à l'électrode négative la plus à l'extérieur ;
un élément isolant intérieur (710) qui isole l'une de l'autre une paire des électrodes bipolaires qui sont adjacentes l'une à l'autre dans la direction d'empilage, chacune de la plurarité d'électrodes bipolaires (100) ayant :
un collecteur de courant (110) comprenant une feuille collectrice de courant d'électrode positive (111) et une une feuille collectrice de courant d'électrode négative (112) ;
une couche de matériau actif d'électrode positive (120) prévue sur la feuille collectrice de courant d'électrode positive du collecteur de courant ; et
une couche de matériau actif d'électrode négative (130) prévue sur la feuille collectrice de courant d'électrode négative du collecteur de courant ; et
l'électrode positive la plus à l'extérieur (200) ayant :
une feuille collectrice de courant d'électrode positive (111) ; et
une couche de matériau actif d'électrode positive (120) prévue sur la feuille collectrice de courant d'électrode positive,
l'électrode négative la plus à l'extérieur (300) ayant :
une feuille collectrice de courant d'électrode négative (112) ; et
une couche de matériau actif d'électrode négative (130) prévue sur la feuille collectrice de courant d'électrode négative,
à chacune d'une périphérie de la feuille collectrice de courant d'électrode positive du collecteur de courant et d'une périphérie de la feuille collectrice de courant d'électrode positive de l'électrode positive la plus à l'extérieur, une partie exempte d'électrode positive (111a) qui n'est pas couverte avec la couche de matériau actif d'électrode positive étant formée,
à chacune d'une périphérie de la feuille collectrice de courant d'électrode négative du collecteur de courant et d'une périphérie de la feuille collectrice de courant d'électrode négative de l'électrode négative la plus à l'extérieur, une partie exempte d'électrode négative (112a) qui fait face à la partie exempte d'élecrode positive dans la direction d'empilage et qui n'est pas couverte avec la couche de matériau actif d'électrode négative étant formée,
une région entre la partie exempte d'électrode positive de l'électrode positive la plus à l'extérieur et la partie exempte d'électrode négative faisant face à la partie exempte d'électrode positive constituant la première région extérieure,
une région entre la partie exempte d'électrode négative de l'électrode négative la plus à l'extérieur et la partie exempte d'électrode positive faisant face à la partie exempte d'électrode négative constituant la deuxième région extérieure,
une région entre une paire des électrodes bipolaires qui sont adjacentes l'une à l'autre, spécifiquement entre la partie exempte d'électrode positive et la partie exempte d'électrode négatve faisant face l'une à l'autre dans la direction d'empilage constituant la région intérieure,
le premier élément isolant comprenant un premier corps isolant extérieur (515) situé dans la première région extérieure,
le deuxième élément isolant comprenant un deuxième corps isolant extérieur (615) situé dans la deuxième région extérieure,
l'élément isolant intérieur comprenant un corps isolant intérieur (712) situé dans la région intérieure, et
chacune d'une épaisseur du premier corps isolant extérieur et d'une épaisseur du deuxième corps isolant extérieur étant plus grande qu'une épaisseur du corps isolant intérieur.

2. Module de stockage d'énergie selon la revendication 1, dans lequel
le premier élément isolant comprend un premier séparateur (510) qui est intercalé entre l'éléctrode positive la plus à l'extérieur et l'électrode bipolaire parmi la pluralité d'électrodes bipolaires faisant face à l'électrode positive la plus à l'extérieur,
le premier séparateur ayant :
un premier corps intercalé (511) qui est intercalé entre la couche de matériau actif d'électrode positive de l'électrode positive la plus à l'extérieur et la couche de matériau actif d'électrode négative de l'électrode bipolaire ; et
un premier corps périphérique (512) qui est connecté au premier corps intercalé et qui est situé dans la première région extérieure,
le premier corps isolant extérieur ayant :
le premier corps périphérique ; et
un premier film isolant (520) qui est un élément séparé du premier séparateur et qui est situé dans la première région extérieure,
le deuxième élément isolant comprenant un deuxième séparateur (610) qui est intercalé entre l'électrode négative la plus à l'extérieur et l'électrode bipolaire parmi la pluralité d'électrodes bipolaires faisant face à l'électrode négative la plus à l'extérieur, le deuxième séparateur ayant la même épaisseur que le premier séparateur,
le deuxième séparateur ayant :
un deuxième corps intercalé (611) qui est intercalé entre la couche de matériau actif d'électrode négative de l'électrode négative la plus à l'extérieur et la couche de matériau actif d'électrode positive de l'électrode bipolaire ; et
un deuxième corps périphérique (612) qui est connecté au deuxième corps intercalé et qui est situé dans la première région extérieure,
le deuxième corps isolant extérieur ayant :
le deuxième corps périphérique ; et
un deuxième film isolant (620) qui est un élément séparé du deuxième séparateur et qui est situé dans la deuxième région extérieure,
l'élément isolant intérieur comprenant un séparateur intérieur (710) qui est intercalé entre une paire des électrodes bipolaires qui sont adjacentes l'une à l'autre dans la direction d'empilage, ce séparateur intérieur ayant la même épaisseur que le premier séparateur,
le séparateur intérieur ayant :
un corps intercalé intérieur (711) qui est intercalé entre la couche de matériau actif d'électrode positive d'une électrode bipolaire de la paire et la couche de matériau actif d'électrode négative de l'autre électrode bipolaire de la paire ; et
un corps périphérique intérieur (712) qui est connecté au corps intercalé intérieur et qui est situé dans la région intérieure, et
le corps isolant itérieur étant constitué du corps périphérique intérieur.

3. Module de stockage d'énergie selon la revendication 2, dans lequel
le premier film isolant (520) est situé dans la première région extérieure et sur un intérieur du premier corps périphérique dans la direction d'empilage, et
le deuxième film isolant (620) est situé dans la deuxième région extérieure et sur un intérieur du deuxième corps périphérique dans la direction d'empilage.

4. Module de stockage d'énergie selon la revendication 3, dans lequel
le premier film isolant (510) est fait du même matériau qu'un matériau du premier corps de scellement et formé d'un seul tenant avec le premier corps de scellement, et
le deuxième film isolant (510) est fait du même matériau qu'un matériau du deuxième corps de scellement et formé d'un seul tenant avec le deuxième corps de scellement.

5. Module de stockage d'énergie selon la revendication 1, dans lequel
le premier élément isolant comprend un premier séparateur (510) qui est intercalé entre l'éléctrode positive la plus à l'extérieur et l'électrode bipolaire parmi la pluralité d'électrodes bipolaires faisant face à l'électrode positive la plus à l'extérieur,
le premier séparateur a :
un premier corps intercalé (511) qui est intercalé entre la couche de matériau actif d'électrode positive de l'électrode positive la plus à l'extérieur et la couche de matériau actif d'électrode négative de l'électrode bipolaire ; et
un premier corps périphérique (512) qui est connecté au premier corps intercalé et qui est situé dans la première région extérieure,
le premier corps isolant étant constitué du premier corps périphérique,
le deuxième élément isolant comprenant un deuxième séparateur (610) qui est intercalé entre l'électrode négative la plus à l'extérieur et l'électrode bipolaire parmi la pluralité d'électrodes bipolaires faisant face à l'électrode négative la plus à l'extérieur, ce deuxième séparateur ayant la même épaisseur que le premier séparateur,
le deuxième séparateur ayant :
un deuxième corps intercalé (611) qui est intercalé entre la couche de matériau actif d'électrode négative de l'électrode négative la plus à l'extérieur et la couche de matériau actif d'électrode positive de l'électrode bipolaire ; et
un deuxième corps périphérique (612) qui est connecté au deuxième corps intercalé et qui est situé dans la deuxième région extérieure,
le deuxième corps isolant étant constitué du deuxième corps périphérique,
l'élément isolant intérieur comprenant un séparateur intérieur (710) qui est situé entre une paire des électrodes bipolaires qui sont adjacentes l'une à l'autre dans la direction d'empilage, ce séparateur intérieur ayant une épaisseur plus petite que l'épaisseur du premier séparateur,
le séparateur intérieur ayant :
un corps intercalé intérieur (711) qui est intercalé entre la couche de matériau actif d'électrode positive d'une électrode bipolaire de la paire et la couche de matériau actif d'électrode négative de l'autre électrode bipolaire de la paire ; et
un corps périphérique intérieur (712) qui est connecté au corps intercalé intérieur et qui est situé dans la région intérieure, et
le corps isolant intérieur étant constitué du corps périphérique intérieur.
